# EUROPÄISCHE PATENTSCHRIFT

(11) **EP 0 340 752 B1**
(45) Veröffentlichungstag und Bekanntmachung des Hinweises auf die Patenterteilung: **13.01.1993**
(21) Anmeldenummer: 89108019.4
(22) Anmeldetag: 03.05.1989
(51) Int. Cl.: B62H 5/00, B62H 5/14

(54) **Geschlitzte Umfassungsschelle zur Befestigung eines Fahrradschlosses an einem Fahrradrahmen**
Slotted clasping clamp for mounting a bicycle lock to a frame
Etrier à fente pour fixer un verrou de bicyclette au cadre

(30) Priorität: 06.05.1988 DE 8806074 U
(43) Veröffentlichungstag der Anmeldung: 08.11.1989
(73) Patentinhaber: Aug. Winkhaus GmbH & Co. KG, D-48291 Telgte (DE)
(72) Erfinder: Kortenbrede, Ludger, D-4404 Telgte (DE)
(74) Vertreter: Weickmann, Heinrich, Dipl.-Ing.

(56) Entgegenhaltungen:
- DE-A- 3 148 017
- DE-A- 3 218 305
- DE-A- 3 248 722
- DE-C- 3 444 760

## Beschreibung

Die Erfindung betrifft eine geschlitzte Umfassungsschelle zur Befestigung eines Fahrradschlosses an einem Fahrradrahmen, wobei die Umfassungsschelle einen Durchgang mit einer Durchgangsachse und einem länglichen Durchgangsquerschnitt in einer zur Durchgangsachse senkrechten Schnittebene besitzt, wobei dieser Durchgang zur Aufnahme eines zur Durchgangsachse im wesentlichen parallelen, tragenden Schenkelabschnitts des Fahrradrahmens und eines zur Durchgangsachse ebenfalls im wesentlichen parallelen Bauteilabschnitts des Fahrradschlosses ausgebildet ist, und zwar so, daß der Schenkelabschnitt und der Bauteilabschnitt in Richtung einer langen Achse des Durchgangsquerschnitts einander benachbart sind, und wobei die Umfassungsschelle durch mindestens eine tangential zur Durchgangsachse angeordnete, einen Schellenschlitz überbrückende Spannschraube einengbar ist. Eine solche Umfassungsschelle ist aus der CH PS 28156 bekannt.

Bei der bekannten Ausführungsform ist die Umfassungsschelle aus einem Blechband gebildet. Der Durchgangsquerschnitt ist länglich. Die Spannschraube verläuft an einem Ende der Längsachse des Durchgangsquerschnitts tangential zur Durchgangsachse. Der Kopf und die Mutter der Spannschraube liegen frei. Diese Ausführungsform einer Umfassungsschelle ist berührungsunfreundlich und beschwört Verletzungsgefahr für die das Fahrrad handhabenden Personen. Außerdem wird nur eine relativ kleine Komponente der durch die Spannschraube aufgebrachten Spannkraft zur Anpressung des Bauteilabschnittes des Fahrradschlosses an den tragenden Schenkelabschnitt des Fahrradrahmens verfügbar. Es muß also eine große Spannkraft an der Spannschraube aufgebracht werden, um eine zuverlässige Anpressung des Bauteilabschnitts des Fahrradschlosses an dem tragenden Schenkelabschnitt des Fahrradrahmens zu erreichen. Dies führt zu einer großen Belastung von Teilen der Umfassungsschelle, die zur Zerstörung führen kann. Bei der Montage ist es überdies kaum möglich, aus den Reaktionsmomenten beim Spannen der Spannschraube auf eine ausreichende Klemmkraft zurückzuschließen.

Die Erfindung liegt die Aufgabe zugrunde, eine gattungsgemäße Umfassungsschelle so auszubilden, daß sie berührungsfreundlich ist und daß die an der Spannschraube aufgebrachte Spannkraft möglichst unmittelbar zur Verklemmung des Bauteilabschnitts des Fahrradschlosses und des zugehörigen Schenkelabschnittes des Fahrradrahmens führt.

Zur Lösung dieser Aufgabe wird vorgeschlagen, daß die Umfassungsschelle aus einem im unbelasteten Zustand formstabilen, jedoch elastisch deformierbaren Kunststoff besteht und daß die Spannschraube innerhalb eines zur langen Achse des Durchgangsquerschnitts parallelen oder unter kleinem spitzen Winkel geneigten Umfangsabschnitt der Umfassungsschelle im wesentlichen vollständig verdeckt unterbringbar ist.

Die Berührungsfreundlichkeit der erfindungsgemäßen Umfassungsschelle wird nicht nur dadurch erreicht, daß sie aus dem berührungsfreundlichen Material Kunststoff besteht, sondern insbesondere dadurch, daß die Spannschraube dank der Parallelität oder annähernden Parallelität zur langen Achse des Durchgangsquerschnitts unschwer nahezu vollständig innerhalb des sie aufnehmenden Umfangsabschnitts untergebracht werden kann. Da die Spannschraube annähernd parallel zu der langen Achse des Durchgangsquerschnitts ist, entspricht die zwischen dem jeweiligen Bauteilabschnitt des Fahrradschlosses und dem jeweiligen Schenkel des Fahrradrahmens auftretende Anpresskraft oder Klemmkraft annähernd der an der Spannschraube erzeugten Spannkraft. Der Monteur hat beim Anbringen des Fahrradschlosses ein sicheres Gefühl für die Größe der aufzubringenden Spannkraft allein aufgrund des Widerstandsmoments, welches die Spannschraube beim Spannen der Schraubbewegung entgegensetzt. Die Herstellung der Umfassungsschelle aus Kunststoff führt dazu, daß die Lackierung des Rahmenschenkels weder bei der Montage noch durch Dauerkorrosion beschädigt wird.

Es wird weiter vorgeschlagen, daß der Schlitz durch zur Durchgangsachse und zueinander im wesentlichen parallele Schlitzflächen definiert ist, welche mit der langen Achse des Durchgangsquerschnitts einen spitzen Winkel bilden. Durch diese Art der Schlitzführung wird zum einen erreicht, daß die Spannschraube auch bei einer je nach Dimensionierung der zu verbindenden Teile relativ großen Schlitzbreite unsichtbar abgedeckt ist.

Eine noch weitergehende Abdeckung der Schraube unabhängig von der Schlitzbreite kann dadurch erreicht werden, daß am Außenumfang eines der im Schlitzbereich einander zugekehrten Endabschnitte der Umfassungsschelle ein Schlitzüberdeckungsfortsatz angebracht ist, welcher an der Außenumfangsfläche des anderen Endabschnitts anlegbar ist.

Diese Art der Ausbildung mit einem Schlitzüberdeckungsfortsatz bringt zusätzlich eine stabilitätserhöhende Anlage zwischen den Endabschnitten. Dabei kann man ein ungehindertes Aufgleiten des Schlitzüberdeckungsfortsatzes auf die Außenumfangsfläche des jeweils anderen Endabschnittes dadurch erzielen, daß der Fortsatz mit der zugehörigen Schlitzbegrenzungsfläche einen stumpfen Winkel bildet.

Ausgehend von der Überlegung, daß der Schenkelabschnitt des Fahrradrahmens und der Bauteilabschnitt des Fahrradschlosses häufig einen Kreisquerschnitt haben werden, empfiehlt es sich, daß die Kontur des Durchgangsquerschnitts in ihren längs der langen Achse beabstandeten Konturbereichen gerundet ist und daß diese gerundeten Konturbereiche durch im wesentlichen geradlinige Konturbereiche miteinander verbunden sind.

Um einer nach Art einer Holzschraube ausgebildeten Spannschraube mit ihrem Gewindeabschnitt ausreichende Eingriffslänge in den einen der Endabschnitte der Umfassungsschelle darzubieten, empfiehlt es sich, daß der Schlitz nahe einem der gerundeten Konturbereiche angeordnet ist. Dann ergibt sich nämlich eine ungleiche Länge der einander gegenüberstehenden Endabschnitte und der längere Endabschnitt kann für die Aufnahme des Gewindes der Spannschraube herangezogen werden. Eine einfache Formgebung für die Umfassungsschelle ergibt sich dabei dann, wenn die eine Schlitzfläche tangential in einen gerundeten Konturbereich übergeht.

Da der Bauteilabschnitt des Fahrradschlosses in der Regel einen kleineren Querschnitt hat als der Schenkelabschnitt des Fahrradrahmens, empfiehlt es sich im Hinblick auf eine satte Anlage der Umfassungsschelle an beiden Abschnitten, daß der Durchgangsquerschnitt in Richtung seiner langen Achse verjüngt ist und daß die eine Schlitzfläche in den dem verjüngten Teil des Durchgangsquerschnitts zugehörigen, gerundeten Konturbereich tangential übergeht. Selbstverständlich hilft diese Gestaltung auch dann, wenn umgekehrt der Querschnitt des Schenkelabschnitts einmal kleiner sein sollte als der Querschnitt des Bauteilabschnittes des Schlosses.

Um ein leichtes Einführen der Spannschraube zu ermöglichen, wird empfohlen, daß die Spannschraube von zwei im wesentlichen miteinander fluchtenden Bohrungen der im Schlitzbereich einander gegenüberstehenden Endabschnitte der Umfassungsschelle aufgenommen ist.

Dem gleichen Ziele dient es, wenn von den Bohrungen die eine als Durchgangsbohrung größeren Durchmessers und die andere als Eingriffsbohrung kleineren Durchmessers ausgebildet ist. Diese Bemessung der Bohrungen wirkt sich besonders vorteilhaft dann aus, wenn die weiter oben erwähnte Schräglage des Schlitzes zu langen Achse des Durchgangsquerschnitts gleichzeitig verwirklicht wird, und/oder wenn der oben erwähnte Schlitzüberdeckungsfortsatz zur Anwendung kommt: In diesem Fall können dann die Endabschnitte dank der Überdimensionierung der einen Bohrung quer zur Spannschraube gegeneinander ausweichen, so daß die Schlitzflächen relativ zueinandergleiten und der Schlitzüberbrückungsfortsatz auf den Außenumfang des anderen Endabschnitts aufgleiten kann.

Im Hinblick auf die Optik und auf eine vollständig schützende Abdeckung der Spannschraube wird dabei weiter vorgeschlagen, daß die Eingriffsbohrung als Sackbohrung ausgebildet ist und/oder daß die Durchgangsbohrung in eine Schraubenkopfversenkung an der Außenumfangsfläche der Umfassungsschelle ausmündet.

Um die Kosten für das Einschneiden eines Innengewindes in die Umfassungsschelle zu vermeiden, wird vorgeschlagen, daß die Spannschraube eine selbstschneidende Spannschraube zum Eingriff in die Eingriffsbohrung ist.

Aus dem oben bereits angedeuteten Grunde, nämlich der Bereitstellung eines möglichst langen Eingriffs für den Gewindeteil der Spannschraube,wird vorgeschlagen, daß die Durchgangsbohrung bei Anordnung des Schlitzes nahe einem Ende der langen Achse des Durchgangsquerschnitts in dem diesem einen Ende zugehörigen Endabschnitt der Umfassungsschelle angeordnet ist.

Um einerseits für den Sitz der Spannschraube genügend Fleisch zur Verfügung zu stellen, andererseits aber die Umfassungsschelle mit möglichst geringem Werkstoffaufwand und in einer abgemagerten und daher optisch günstigen Erscheinungsform auszubilden, wird vorgeschlagen, daß die Umfassungsschelle in dem die Spannschraube aufnehmenden Umfangsbereich einen gegenüber dem restlichen Umfangsbereich verstärkten Materialquerschnitt besitzt.

Eine für die Unterbringung einer langen Spannschraube und gleichzeitig für das Erscheinungsbild günstige Gestaltung besteht darin, daß die Außenumfangskontur der Umfassungsschelle einen zur Spannschraube im wesentlichen parallelen ersten Konturbereich, angrenzend an diesen ersten Konturbereich zwei zu dem ersten Konturbereich im wesentlichen senkrechte zweite und dritte Konturbereiche und einen an diese zweiten und dritten Konturbereiche stetig anschließenden vierten Konturbereich besitzt, welcher der Kontur des Durchgangsquerschnitts unter Einhaltung annähernd konstanten Materialquerschnitts folgt.

Die Umfassungsschelle ist insbesondere, aber nicht ausschließlich, zur Befestigung von Bügelschlössern geeignet. Solche Schlösser sind beispielsweise aus Figur 5 der DE OS 32 48 722 bekannt. Sie umfassen einen U-förmigen Trägerbügel, dessen U-Schenkel durch je eine Umfassungsschelle an einem Schenkel einer Fahrradgabel befestigt sind und wobei an einem U-Schenkelende ein Schwenkbügel angebracht ist, welcher zwischen einer annähernden Parallelstellung zu dem zugehörigen Gabelschenkel und einer die Speichen des zugehörigen Rades durchgreifenden Absperrstellung verschwenkbar ist und zumindest in der Absperrstellung sperrbar ist.

Die beiliegenden Figuren erläutern die Erfindung anhand eines Beispiels; es stellen dar:
- Figur 1: Die Hinterradgabel eines Fahrrads mit angebautem Schwenkbügelschloß;
- Figur 2: einen Schnitt nach Linie II - II der Figur 1;
- Figur 3: eine Ansicht einer Umfassungsschelle in Pfeilrichtung II der Figur 1;
- Figur 4: eine Ansicht der Umfassungsschelle von Figur 3 in Pfeilrichtung IV der Figur 3;
- Figur 5: einen Schnitt nach Linie V - V der Figur 4;
- Figur 6: einen Schnitt nach Linie VI - VI der Figur 3.

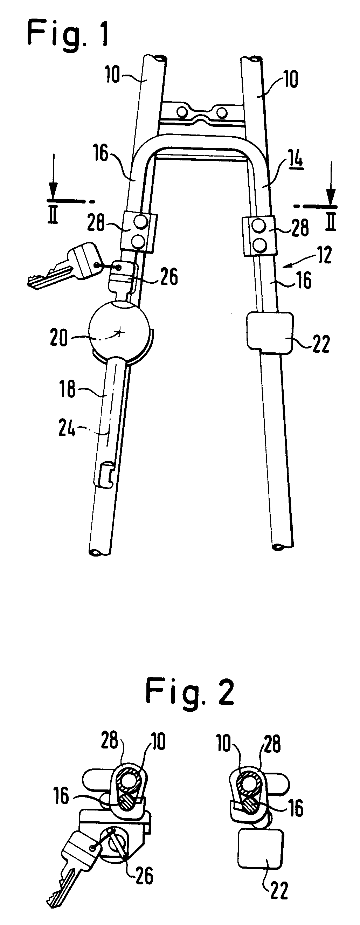

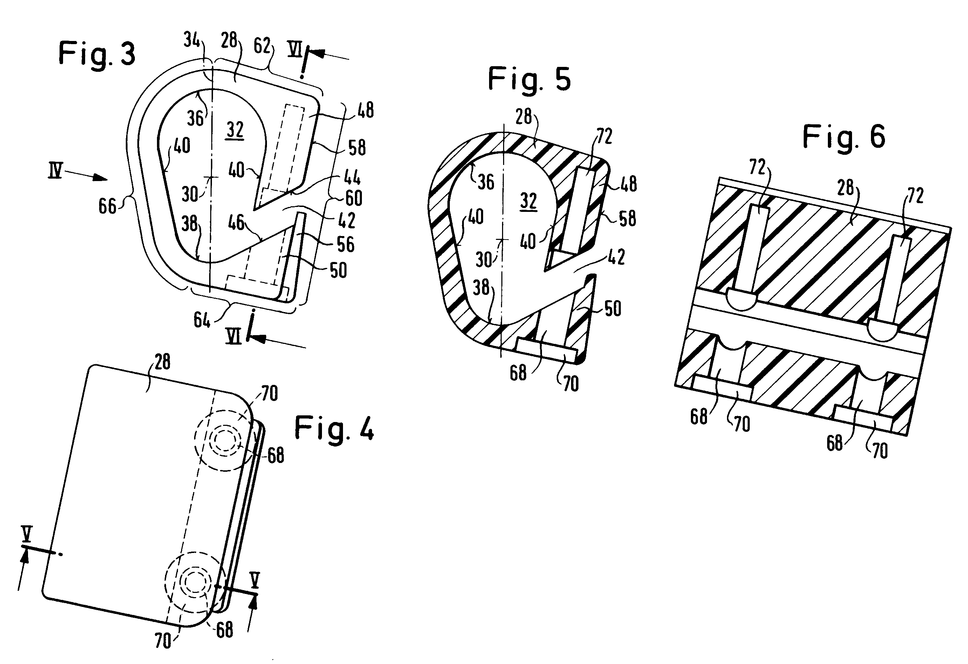

In Figur 1 sind die beiden Schenkel einer Hinterradgabel mit 10 bezeichnet. An dieser Hinterradgabel 10 ist ein Schwenkbügelschloß 12 befestigt, das einen Trägerbügel 14 mit zwei Schenkeln 16 aufweist. Am Ende des einen Schenkels 16 ist ein Schwenkbügel 18 um eine Achse 20 drehbar gelagert zwischen der in Figur 1 dargestellten Parallelstellung zu dem Gabelschenkel 10 und einer Absperrstellung, in welcher er das nicht dargestellte Rad durchgreift, in das Sperrlager 22 eingreift und durch Drehen um seine Längsachse 24 vermittels eines Schlüssels 26 absperrbar ist. Die Befestigung der Bügelschenkel 16 an den Gabelschenkel 10 ist durch die Umfassungsschelle 28 hergestellt, wie in Figur 2 dargestellt. Einzelheiten der Umfassungsschelle erkennt man aus den Figuren 3 bis 6. Eine Umfassungsschelle 28 hat demnach eine Durchgangsachse 30 und einen Durchgang 32 von länglichem Querschnitt. Die Längsachse des Durchgangsquerschnitts 32 ist mit 34 bezeichnet. Die Kontur des Durchgangsquerschnitts setzt sich zusammen aus einem größeren Bogenabschnitt 36, einem kleineren Bogenabschnitt 38 und zwei geradlinigen Abschnitten 40. Im Bereich des geradlinigen Abschnittes 40 befindet sich ein Schlitz 42 mit je einer Schlitzfläche 44 und einer Schlitzfläche 46 an einem Endabschnitt 48 bzw. 50 der Umfassungsschelle 28. An dem Endabschnitt 50 ist ein Schlitzüberdeckungsfortsatz 56 angebracht, der zur Anlage an einem Flächenabschnitt 58 des Endabschnittes 48 ausgebildet ist. Die Außenkontur der Umfassungsschelle 28 ist durch einen ersten Konturbereich 60,zweite und dritte Konturbereiche 62 und 64 und einen vierten Konturbereich 66 gebildet. Die Materialstärke der Umfassungsschelle ist im Bereich der Endabschnitte 48 und 50 verstärkt.

In dem Endabschnitt 50 ist, wie aus Figur 5 zu ersehen, eine Durchgangsbohrung 68 vorgesehen, die in eine Versenkung 70 mündet. In dem Endabschnitt 48 ist eine Sackbohrung 72 vorgesehen. Der Durchmesser der Durchgangsbohrung 68 ist größer als der Durchmesser der Sackbohrung 72.

Wie aus Figur 6 zu ersehen, sind in Achsrichtung der Durchgangsachse 30 nebeneinander zwei Sackbohrungen 72 und zwei Durchgangsbohrungen 68 vorgesehen, die jeweils eine selbstschneidende Spannschraube aufnehmen. Beim Spannen der Umfassungsschelle 28 legt sich, wie aus Figur 2 zu ersehen, der Schlitzüberdeckungsfortsatz 56 auf die Anlagefläche 58, so daß der Schlitz 42 nach außen vollständig geschlossen ist. Dank der größeren Bemessung der Durchgangsbohrung 68 haben die Endabschnitte 48 und 50 beim Spannen relativ zueinander ein Spiel.

## Patentansprüche

1. Geschlitzte Umfassungsschelle zur Befestigung eines Fahrradschlosses (12) an einem Fahrradrahmen, wobei die Umfassungsschelle (28) einen Durchgang (32) mit einer Durchgangsachse (30) und einem länglichen Durchgangsquerschnitt in einer zur Durchgangsachse (30) senkrechten Schnittebene besitzt, wobei dieser Durchgang (32) zur Aufnahme eines zur Durchgangsachse (30) im wesentlichen parallelen, tragenden Schenkelabschnitts (10) des Fahrradrahmens und eines zur Durchgangsachse ebenfalls im wesentlichen parallelen Bauteilabschnitts (16) des Fahrradschlosses (12) ausgebildet ist, und zwar so, daß der Schenkelabschnitt (10) und der Bauteilabschnitt in Richtung einer langen Achse des Durchgangsquerschnitts einander benachbart sind, und wobei die Umfassungsschelle durch mindestens eine tangential zur Durchgangsachse (30) angeordnete, einen Schellenschlitz (42) überbrückende Spannschraube einengbar ist,
dadurch gekennzeichnet,
daß die Umfassungsschelle (28) aus einem im unbelasteten Zustand formstabilen, jedoch elastisch deformierbaren Kunststoff besteht und daß die Spannschraube innerhalb eines zur langen Achse (34) des Durchgangsquerschnitts parallelen oder unter kleinem spitzen Winkel geneigten Umfangsabschnitt (48/50) der Umfassungsschelle (28) im wesentlichen vollständig verdeckt unterbringbar ist.

2. Geschlitzte Umfassungsschelle nach Anspruch 1,
dadurch gekennzeichnet,
daß der Schlitz (42) durch zur Durchgangsachse (30) und zueinander im wesentlichen parallele Schlitzflächen (44/46) definiert ist, welche mit der langen Achse (34) des Durchgangsquerschnitts einen spitzen Winkel bilden.

3. Geschlitzte Umfassungsschelle nach einem der Ansprüche 1 und 2,
dadurch gekennzeichnet,
daß am Außenumfang eines der im Schlitzbereich einander zugekehrten Endabschnitte (48/50) der Umfassungsschelle (28) ein Schlitzüberdeckungsfortsatz (56) angebracht ist, welcher an der Außenumfangsfläche (58) des anderen Endabschnitts (48) anlegbar ist.

4. Geschlitzte Umfassungsschelle nach Anspruch 3,
dadurch gekennzeichnet,
daß der Fortsatz (56) mit der zugehörigen Schlitzbegrenzungsfläche (46) einen stumpfen Winkel bildet.

5. Geschlitzte Umfassungsschelle nach einem der Ansprüche 1 bis 4,
dadurch gekennzeichnet,
daß die Kontur des Durchgangsquerschnitts in ihren längs der langen Achse (34) beabstandeten Konturbereichen (36/38) gerundet ist und daß diese gerundeten Konturbereiche (36/38) durch im wesentlichen geradlinige Konturbereiche (40) miteinander verbunden sind.

6. Geschlitzte Umfassungsschelle nach Anspruch 5,
dadurch gekennzeichnet,
daß der Schlitz (42) nahe einem (38) der gerundeten Konturbereiche (36/38) angeordnet ist.

7. Geschlitzte Umfassungsschelle nach Anspruch 6,
dadurch gekennzeichnet,
daß eine Schlitzfläche (46) tangential in einen gerundeten Konturbereich übergeht.

8. Geschlitzte Umfassungsschelle nach Anspruch 7,
dadurch gekennzeichnet,
daß der Durchgangsquerschnitt in Richtung seiner langen Achse (34) verjüngt ist und daß die eine Schlitzfläche (46) in den dem verjüngten Teil des Durchgangsquerschnitts zugehörigen, gerundeten Konturbereich (38) tangential übergeht.

9. Geschlitzte Umfasungsschelle nach einem der Ansprüche 1 bis 8,
dadurch gekennzeichnet,
daß die Spannschraube von zwei im wesentlichen miteinander fluchtenden Bohrungen (68 /72) der im Schlitzbereich (42) einander gegenüberstehenden Endabschnitte (48/50) der Umfassungschelle (28) aufgenommen ist.

10. Geschlitzte Umfassungsschelle nach Anspruch 9,
dadurch gekennzeichnet,
daß von den Bohrungen (68/72) die eine ( 68) als Durchgangsbohrung größeren Durchmessers und die andere (72) als Eingriffsbohrung kleineren Durchmessers ausgebildet ist.

11. Geschlitzte Umfassungsschelle nach Anspruch 10,
dadurch gekennzeichnet,
daß die Eingriffsbohrung (72) als Sackbohrung ausgebildet ist.

12. Geschlitzte Umfassungsschelle nach einem der Ansprüche 10 und 11,
dadurch gekennzeichnet,
daß die Durchgangsbohrung (68) in eine Schraubenkopfversenkung (70) an der Außenumfangsfläche der Umfassungsschelle (28) ausmündet.

13. Geschlitzte Umfassungsschelle nach einem der Ansprüche 10 bis 12,
dadurch gekennzeichnet,
daß die Spannschraube eine selbstschneidende Spannschraube zum Eingriff in die Eingriffsbohrung (72) ist.

14. Geschlitzte Umfassungsschelle nach einem der Ansprüche 10 bis 13,
dadurch gekennzeichnet,
daß die Durchgangsbohrung (68) bei Anordnung des Schlitzes (42) nahe einem Ende der langen Achse (34) des Durchgangsquerschnitts in dem diesem einen Ende zugehörigen Endabschnitt (50) der Umfassungsschelle (28) angeordnet ist.

15. Geschlitzte Umfassungsschelle nach einem der Ansprüche 1 bis 14,
dadurch gekennzeichnet,
daß sie in dem die Spannschraube aufnehmenden Umfangsbereich (48/50) einen gegenüber dem restlichen Umfangsbereich verstärkten Materialquerschnitt besitzt.

16. Geschlitzte Umfassungsschelle nach Anspruch 15,
dadurch gekennzeichnet,
daß die Außenumfangskontur der Umfassungsschelle (28) einen zur Spannschraube im wesentlichen parallelen ersten Konturbereiche (60), angrenzend an diesen ersten Konturbereich (60) zwei zu dem ersten Konturbereich (60) im wesentlichen senkrechte zweite und dritte Konturbereiche (62/64) und einen an diese zweiten und dritten Konturbereiche stetig anschließenden vierten Konturbereich (66) besitzt, welcher der Kontur des Durchgangsquerschnitts unter Einhaltung annähernd konstanten Materialquerschnitts folgt.

17. Geschlitzte Umfassungsschelle nach einem der Ansprüche 1 bis 16,
dadurch gekennzeichnet,
daß sie Teil eines Fahrradrahmens ist, wobei der Durchgang (32) den tragenden Schenkelabschnitt (10) des Fahrradrahmens und den Bauteilabschnitt (16) des Fahrradschlosses (12) umfaßt und durch die Spannschraube unter Anpressung des Bauteilabschnittes (16) gegen den Schenkelabschnitt (10) eingeengt ist.

18. Geschlitzte Umfassungsschelle nach Anspruch 17,
dadurch gekennzeichnet,
daß das Fahrradschloß (12) ein Bügelschloß ist mit einem U-förmigen Trägerbügel (14), dessen U-Schenkel (16) durch je eine Umfassungsschelle (28) an einem Schenkel (10) einer Fahrradgabel befestigt sind und wobei an einem U-Schenkelende ein Schwenkbügel (18) angebracht ist, welcher zwischen einer annähernden Parallelstellung zu dem zugehörigen Gabelschenkel (10) und einer die Speichen des zugehörigen Rades durchgreifenden Absperrstellung verschwenkbar ist und zumindest in der Absperrstellung sperrbar ist.

## Claims

1. A slit enclosing-clamp for fastening a bicycle lock (12) to a bicycle frame, the enclosing-clamp (28) having a passage (32) with a through axis (30) and an elongate through cross section in a section plane perpendicular to the through axis (30), this passage (32) being constructed to accommodate a supporting arm section (10) of the bicycle frame, which arm section (10) is substantially parallel to the through axis (30), and a component section (16) of the bicycle lock (12), which is likewise substantially parallel to the through axis, in such a way that the arm section (10) and the component section are adjacent each other in the direction of a long axis of the through section, and the enclosing-clamp being narrowable by at least one locking screw arranged tangentially to the through axis (30) and bridging a clamp slit (42), characterized in that the enclosing-clamp (28) consists of an elastically deformable plastics material which is, however, dimensionally stable in the unloaded state and in that the locking screw can be accommodated in a substantially completely covered manner within a circumferential section (48/50) of the enclosing-clamp (28) inclined at a small acute angle.

2. A slit enclosing-clamp according to claim 1, characterized in that the slit (42) is defined by slit faces (44/46) substantially parallel with the through axis (30) and with each other, which slit faces (44/46) form an acute angle with the long axis (34) of the through cross section.

3. A slit enclosing-clamp according to either one of claims 1 and 2, characterized in that a slit-covering extension (56) is attached to the outer circumference of one of the end sections (48/50) of the enclosing-clamp (28) facing each other in the slit area, which extension (56) may be positioned against the outer circumferential face (58) of the other end section (48).

4. A slit enclosing-clamp according to claim 3, characterized in that the extension (56) forms an obtuse angle with the associated slit defining face (46).

5. A slit enclosing-clamp according to any one of claims 1 to 4, characterized in that the contour of the through cross section is rounded in its contour areas (36/38) spaced along the long axis (34) and in that these rounded contour areas (36/38) are connected together by substantially rectilinear contour areas (40).

6. A slit enclosing-clamp according to claim 5, characterized in that the slit (42) is arranged near one (38) of the rounded contour areas (36/38).

7. A slit enclosing-clamp according to claim 6, characterized in that a slit face (46) merges tangentially into a rounded contour area.

8. A slit enclosing-clamp according to claim 7, characterized in that the through section tapers in the direction of its long axis (34) and in that the one slit face (46) merges tangentially into the rounded contour area (38) associated with the tapered part of the through section.

9. A slit enclosing-clamp according to any one of claims 1 to 8, characterized in that the locking screw is accommodated by two substantially mutually aligned bores (68/72) in the end sections (48/50) of the enclosing-clamp (28) located opposite each other in the slit area (42).

10. A slit enclosing-clamp according to claim 9, characterized in that, of the bores (68/72), one (68) is constructed as a through-hole of greater diameter and the other (72) as an engagement hole of smaller diameter.

11. A slit enclosing-clamp according to claim 10, characterized in that the engagement hole (72) is constructed as a blind hole.

12. A slit enclosing-clamp according to either one of claims 10 and 11, characterized in that the through-hole (68) opens into a screw head recess (70) on the outer circumferential face of the enclosing-clamp (28).

13. A slit enclosing-clamp according to any one of claims 10 to 12, characterized in that the locking screw is a self-cutting locking screw for engagement in the engagement hole (72).

14. A slit enclosing-clamp according to any one of claims 10 to 13, characterized in that, with the slit (42) arranged near one end of the long axis (34) of the through cross section, the through-hole (68) is arranged in the end section (50) of the enclosing-clamp (28) associated with this one end.

15. A slit enclosing-clamp according to any one of claims 1 to 14, characterized in that in the circumferential area (48/50) accommodating the locking screw it has a material cross section reinforced with respect to the remaining circumferential area.

16. A slit enclosing-clamp according to claim 15, characterized in that the outer circumferential contour of the enclosing-clamp (28) has a first contour area (60) substantially parallel with the locking screw, two second and third contour areas (62/64) adjoining this first contour area (60) and substantially perpendicular thereto and a fourth contour area (66) continuously adjoining these second and third contour areas, which fourth contour area (66) follows the contour of the through cross section maintaining an approximately constant material cross section.

17. A slit enclosing-clamp according to any one of claims 1 to 16, characterized in that it is part of a bicycle frame, the passage (32) enclosing the supporting arm section (10) of the bicycle frame and the component section (16) of the bicycle lock (12) and being narrowed by the locking screw, which causes the component section (16) to be pressed against the arm section (10).

18. A slit enclosing-clamp according to claim 17, characterized in that the bicycle lock (12) is a stirrup lock with a U-shaped supporting stirrup (14), whose U-legs (16) are each fastened to an arm (10) of a bicycle fork by an enclosing-clamp (28) and a swivel shackle (18) being attached to a U-leg end, said swivel shackle (18) being swivellable between a position approximately parallel to the associated fork arm (10) and a locking position engaging through the spokes of the associated wheel and being lockable at least in the locking position.

## Revendications

1. Collier fendu destiné à fixer une serrure de bicyclette (12) sur un cadre de bicyclette, dans lequel le collier (28) possède un passage traversant (32) avec un axe (30) et une section transversale allongée dans un plan de coupe perpendiculaire à l'axe (30), dans lequel ce passage est conçu pour loger une partie (10) en forme de montant, porteuse, du cadre de la bicyclette, sensiblement parallèle à l'axe (30) ainsi qu'une partie constructive (16), de la serrure de la bicyclette, sensiblement parallèle aussi à l'axe du passage, et ce de manière que la partie (10) en forme de montant et la partie constructive soient rapprochées l'une de l'autre dans la direction d'un grand axe de la section transversale du passage et dans lequel le collier peut être rétréci par au moins une vis de serrage, disposée tangentiellement à l'axe (30) du passage, franchissant une fente (42) du collier, caractérisé en ce que le collier (28) est réalisé dans une matière plastique de forme stable à l'état non sollicité, mais élastiquement déformable et en ce que la vis de serrage peut être logée de façon presque totalement dissimulée, à l'intérieur d'une partie périphérique (48/50) du collier (28), parallèle au grand axe (34) de la section transversale du passage, ou inclinée sous un petit angle aigu.

2. Collier fendu selon la revendication 1, caractérisé en ce que la fente (42) est définie par des surfaces (44, 46) sensiblement parallèles entre elles et à l'axe (30) du passage, lesquelles surfaces forment un angle aigu avec le grand axe (34) de la section transversale du passage.

3. Collier fendu selon l'une des revendications 1 ou 2, caractérisé en ce qu'il est prévu, sur le pourtour extérieur de l'une des parties terminales (48, 50), tournées l'une vers l'autre dans la zone de la fente, du collier (28), un prolongement de recouvrement de fente (56) qui peut être appliqué contre la surface périphérique extérieure (58) de l'autre partie terminale (48).

4. Collier fendu selon la revendication 3, caractérisé en ce que le prolongement (56) forme un angle obtu avec la surface correspondante de délimitation de fente (46).

5. Collier fendu selon l'une des revendications 1 à 4, caractérisé en ce que le contour de la section transversale du passage est arrondi dans ses zones de contour (36, 38) espacées l'une de l'autre, le long du grand axe (34) et en ce que ces zones de contour (36, 38) arrondies sont reliées entre elles par des zones de contour (40) sensiblement rectilignes.

6. Collier fendu selon la revendication 5, caractérisé en ce que la fente (42) est située à proximité de l'une (38) des zones de contour (36/38) arrondies.

7. Collier fendu selon la revendication 6, caractérisé en ce qu'une surface (46) délimitant la fente se prolonge tangentiellement par une zone de contour arrondie.

8. Collier fendu selon la revendication 7, caractérisé en ce que la section transversale du passage est rétrécie en direction de son grand axe (34) et en ce qu'une surface (46) délimitant la fente se prolonge tangentiellement par la zone de contour (38) arrondie, correspondant à la partie rétrécie de la partie transversale du passage.

9. Collier fendu selon l'une des revendications 1 à 8, caractérisé en ce que la vis de serrage est logée dans deux trous (68/72) à peu près alignés entre eux, des parties terminales (48, 50), opposées l'une à l'autre dans la zone de fente (42), du collier (28).

10. Collier fendu selon la revendication 9, caractérisé en ce que l'un (68) des trous (68/72) est un trou débouchant de plus grand diamètre et l'autre trou (72) est un trou d'engagement de plus petit diamètre.

11. Collier fendu selon la revendication 10, caractérisé en ce que le trou d'engagement (72) est un trou borgne.

12. Collier fendu selon l'une des revendications 10 ou 11, caractérisé en ce que le trou débouchant (68) débouche dans un fraisage (70) de tête de vis sur la surface périphérique extérieure du collier (28).

13. Collier fendu selon l'une des revendications 10 à 12, caractérisé en ce que la vis de serrage est une vis autotaraudeuse destinée à s'engager dans le trou d'engagement (72).

14. Collier fendu selon l'une des revendications 10 à 13, caractérisé en ce que,dans le cas où la fente (42) est située à proximité d'une extrémité du grand axe (34) de la section transversale du passage, le trou débouchant (68) se trouve dans la partie terminale (50) du collier (28) correspondant à cette extrémité.

15. Collier fendu selon l'une des revendications 1 à 14, caractérisé en ce qu'il présente, dans la zone périphérique (48/50) logeant la vis de serrage, une section de matière renforcée par rapport à la zone périphérique restante.

16. Collier fendu selon la revendication 15, caractérisé en ce que le contour périphérique extérieur du collier (28) présente une première zone de contour (60) sensiblement parallèle à la vis de serrage, deux deuxième et troisième zones de contour (62/64), adjacentes à cette première zone de contour (60) et sensiblement perpendiculaires à celle-ci ainsi qu'une quatrième zone de contour (66) se rattachant en permanence à ces deuxième et troisième zones de contour, laquelle zone de contour (66) suit le contour de la section transversale de traversée, en respectant une section transversale de matière à peu près constante.

17. Collier fendu selon l'une des revendications 1 à 16, caractérisé en ce qu'il fait partie d'un cadre de bicyclette, le passage (32) comprenant la partie (10) formant montant, porteuse du cadre de la bicyclette ainsi que la partie constitutive (16) de la serrure (12) de la bicyclette et étant rétrécie par la vis de serrage, par pression de la partie d'élément (16) contre la partie de côté (10).

18. Collier fendu selon la revendication 17, caractérisé en ce que la serrure (12) de la bicyclette est une serrure à étrier avec un étrier de support (14) en U dont les branches (16) du U sont fixées chacune par un collier (28) sur un montant (10) d'une fourche de bicyclette et en ce qu'un étrier pivotant (18) est monté à une extrémité de branche de U, lequel étrier pivotant peut pivoter entre une position à peu près parallèle au montant de fourche (10) correspondant et une position de verrouillage dans laquelle il traverse les rayons de la roue correspondante et peut être bloqué au moins dans la position de verrouillage.
